# EUROPEAN PATENT SPECIFICATION

(11) **EP 0 807 988 B1**
(45) Date of publication and mention of the grant of the patent: **07.11.2001**
(21) Application number: 97303150.3
(22) Date of filing: 09.05.1997
(51) Int. Cl.: H01Q 1/24, H04B 1/38

(54) **Coupling element for a radio telephone antenna**
Kupplungselement für eine Funktelefonantenne
Elément de couplage por une antenne de radio téléphone

(30) Priority: 14.05.1996 FI 962051
(43) Date of publication of application: 19.11.1997
(73) Proprietor: Filtronic LK Oy, 90440 Kempele (FI)
(72) Inventor: Vuokko, Kai, 33210 Tampere (FI); Annamaa, Petteri, 90550 Oulu (FI)
(74) Representative: Brax, Matti Juhani

(56) References cited:
- WO-A-95/07556
- GB-A- 2 266 997
- US-A- 4 220 955
- US-A- 5 357 262
- PATENT ABSTRACTS OF JAPAN vol. 017, no. 706 (E-1483), 22 December 1993 & JP 05 243830 A (MARANTZ JAPAN INC), 21 September 1993,
- PATENT ABSTRACTS OF JAPAN vol. 097, no. 002, 28 February 1997 & JP 08 279712 A (SONY CORP)

## Description

The invention relates to an arrangement for connecting a radio communication device to an external antenna. The invention can be advantageously applied for connecting a mobile phone to a car antenna.

A common way of improving the car use characteristics of a mobile phone is to install outside the body of the car a so-called car antenna to which the mobile phone is connected via a coaxial conductor and a RF connector at the end of the conductor. Therefore, a prior art mobile phone must include a counterpart for said RF connector. Then the antenna of the mobile phone must be made inoperative either by an automatic switch connected to said counterpart for the RF connector or by the user with a separate switch, lest simultaneous operation of the both antennas cause interference and losses.

Said RF connector and its counterpart may constitute a standard coaxial interface based on galvanic contact, but such a solution is susceptible to oxidization, dirt and wear. A solution is known from Finnish Patent No. 84536 and corresponding EPO application EP-0 399 975, wherein the RF coupling between the mobile phone and the connector part in the car installation set is made capacitively by means of metal plate counterparts. This arrangement avoids said oxidization, dirt and wear problems, but it does not eliminate the need for a separate switch to disconnect the mobile phone antenna for the duration of car use. In addition, the switching means and the transmission lines connected to the means require space inside the mobile phone.

There also exist prior art methods and devices for electromagnetically coupling a car antenna to a mobile phone antenna. The simplest electromagnetic coupler is an induction loop placed around the mobile phone antenna. Patent document GB-2 266 997 discloses a solution according to Figure 1, wherein a connector part B comprising a resonator element C is attached with adhesive tape or the like to the casing of a mobile phone A to be used in a car. By attaching the connector part B to the mobile phone A said resonator element C is brought so close to the mobile phone antenna D that it is electromagnetically coupled to the antenna and starts to resonate, whereby RF power radiated by the mobile phone antenna is coupled to it and that power is further taken via a coaxial conductor E to the car antenna. A disadvantage of this arrangement is that the coupling between the mobile phone antenna D and the resonator element C depends on their positions relative to each other. An external resonator element also puts an electric load to the mobile phone antenna, thereby decreasing its resonating frequency and weakening the coupling in the uppper part of the frequency band used.

The publication US 4,220,955 to Frye discloses a coupling device which is meant to be slid over a rubber-insulated helix antenna. The coupling device comprises a central insulating sleeve, the outer surface of which comprises a loosely wound helical conductive element. The upper end of the helical element is galvanically coupled to the inner conductor of a coaxial connector, and the cylindrical outer conductor of the coaxial connector is coupled to a conductive, hollow cylindrical chamber which is also the outer cover of the coupling element. The cavity between the sleeve and the chamber is filled with air.

The publication WO 95/07556 discloses an inductive loop which is to be placed around the protruding antenna of a radio device with the help of a dielectric support plate. There is an impedance matching circuit that couples the inductive loop to both the inner and outer conductors of a coaxial cable.

The object of the invention is to provide an arrangement for connecting a radio communication device, advantageously a cellular mobile phone, to an external antenna, partly avoiding and partly reducing the aforementioned disadvantages related to prior art solutions. The invention may provide an arrangement with which said connection to an external antenna is done without a separate antenna switch and with small losses. The invention may be applied in large scale production and may be durable and easy to use.

The invention is based on the idea that dielectric material with a high permittivity attracts electromagnetic energy. Therefore a dielectric piece, together with conductors, can be used to direct the electromagnetic field radiated by the antenna of a radio communication device. The field can be guided e.g. to the feed cable of a external antenna with relatively small losses. A dielectric coupling element is placed near the antenna of a radio communication device so that the electromagnetic waves leaving the antenna refract on the boundary surface in an optimal manner, i.e. so that significant part of the energy radiated by the antenna of the radio communication device is directed to the coupling element.

The electrical length of the coupling element may be e.g. half or a quarter of the wavelength of the carrier of the radio communication device. The coupling element has a port through which the electromagnetic field is taken to a coaxial cable and through this to external antenna. Similarly, the field received by the external antenna is taken via the coaxial cable and the signal port to the coupling element wherefrom it is guided to the antenna of the radio communication device.

According to the present invention there is provided a coupling arrangement for connecting a radio telephone to an external antenna, comprising means for contacting said radio telephone detachably to it, a cable for feeding the external antenna, and a coupling element for transferring electromagnetic field between the fixed antenna of radio telephone and said cable. The coupling element is wholly beside the fixed antenna and the angle between the longitudinal axis of the coupling element and the axis of the fixed antenna deviates substantially from zero. The coupling element has dielectric body with conductive coating on at least two longitudinal surfaces and a coupling hole. Said contacting means to the radio telephone have conductive and grounded coating, which is connected to outer of said conductive coatings of the coupling element, the inner of said conductive coatings being arranged for connection to the external antenna.

The invention is described in more detail with reference to the preferred embodiments, presented for the sake of illustration, and to the accompanying drawings wherein
- Fig. 1: shows an arrangement according to the prior art to connect a mobile phone to an external antenna,
- Fig. 2: shows a preferred embodiment of the coupling element according to the invention,
- Fig. 3: shows an example of the arrangement according to the invention,
- Fig. 4: shows another example of the coupling element according to the invention.

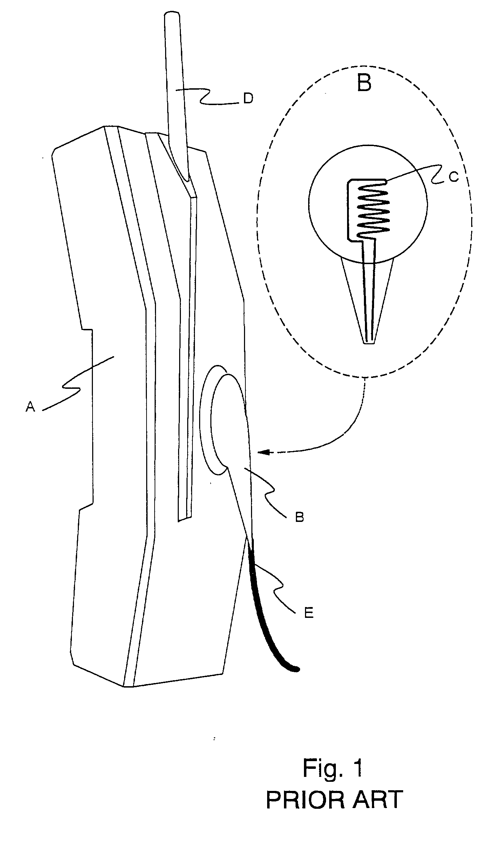

Fig. 1 was already explaned in connection with the description of the prior art.

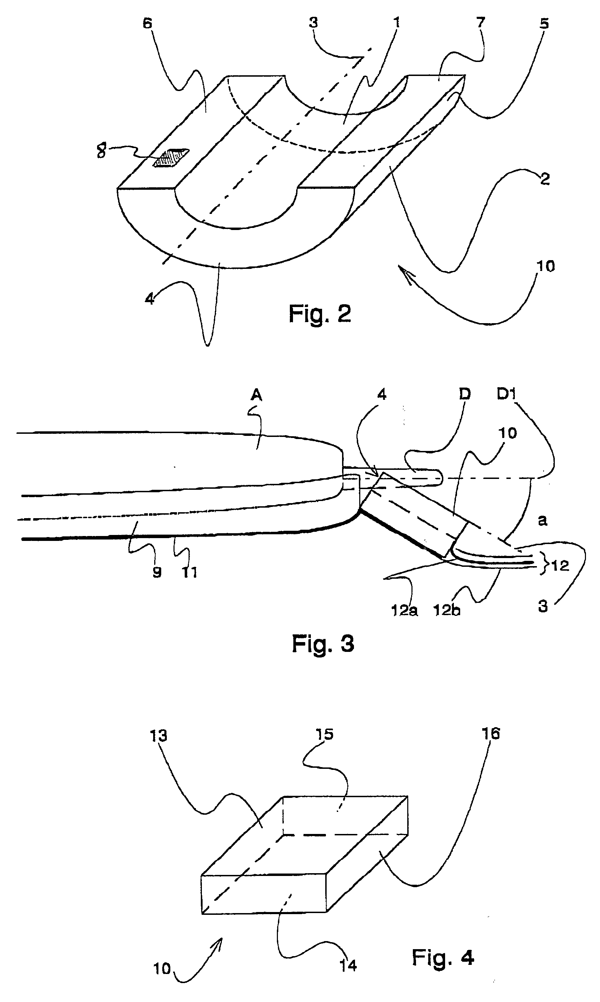

Fig. 2 is a schematic illustration of a piece 10 in the shape of a cylinder segment having an inner surface 1 in the shape of a cylinder part and an outer surface 2 in the shape of a cylinder part concentric with the aforementioned cylinder part but having a longer radius. The drawing also shows the imaginary longitudinal axis 3 of the circular cylinders that include surfaces 1 and 2. The cylinder segment determined by the inner and outer surfaces is bounded by a first end surface 4 and a second end surface 5 perpendicular to the axis 3. In addition, the piece is bounded by plane surfaces 6 and 7 parallel to the axis 3 and intersecting all the above-mentioned surfaces.

A "longitudinal axis" means in this description and in patent claims above-explaned straight line and also a straight line parallel with a longitudinal edge of dielectric piece shaped in another way. Correspondingly "longitudinal" means the direction of the longitudinal axis and at the same time the propagation direction of electromagnetic field. The "crosswise direction" means in patent claims a direction perpendicular to the longitudinal axis.

According to the invention, the piece shown in Fig. 2 is made of a material having a high dielectric constant, advantageously εᵣ = 36 or εᵣ = 82 or a corresponding value in that order of magnitude. Suitable materials include zircon tin titanate and barium neodymium titanate which are commonly used as materials for body blocks of so-called ceramic filters. Ceramic filters are radio frequency filters used in mobile phones, for example. The inner surface 1 and outer surface 2 are treated with a metal-bearing coating material, said material and its use being known to one skilled in the art as they are applied in the manufacture of the ceramic filters. On the inner surface 1 thus is an inner conductor and on the outer surface 2 is an outer conductor. The structure constitutes a dielectric resonator the electrical length of which in the direction of the axis 3 is half of the wavelength of the resonating frequency as the end surfaces 4 and 5 are electrically non-conductive. Furthermore, if the inner conductor and outer conductor are short-circuited by forming on the second end surface 5 an electrically conductive coating which is in galvanic contact with the coatings of both the inner surface 1 and outer surface 2, the electrical length of the structure in the direction of the axis 3 will be a quarter of the wavelength of the resonating frequency.

The electromagnetic field can penetrate into the piece shown in Fig. 2 through open end surfaces 4 and 5 or if end surface 5 is coated, through the open end surface 4. The electromagnetic field is fed to the coupling element shown in Fig. 2 through the open end surface 4 (and/or 5 if surface 5 is open). The open end surface 4 can also be called a coupling hole. If necessary, it is possible to form on plane surfaces 6 and 7 electrically conductive coupling patterns, or so-called parasitic elements, the principle of which is known from ceramic filter technology and which affect, among other things, the coupling bandwidth, ie. the width of the frequency band on which the electromagnetic field can be fed to the coupling element without significant coupling losses.

The matching between the antenna and the coupling element generally refers to the quality of the electromagnetic coupling between them. The antenna is in tune on a particular frequency band. The design of the coupling element and possible parasitic elements are chosen such that when the coupling element is brought in the vicinity of the antenna, the coupling element is in tune essentially on the same frequency band as the antenna. Then, the coupling loss between the antenna and the coupling element on the frequency band in question is small, advantageously about -1 to -3 decibels. The tuning-in of a dielectric coupling element on a desired frequency band e.g. by changing its design and/or parasitic elements is a technique known to a person skilled in the art.

Fig. 3 shows an apparatus for connecting a mobile phone to an external antenna, the apparatus including a coupling element according to Fig. 2. The drawing shows in schematic format a mobile phone A and its fixed antenna D. The coupling element 10 according to the invention is attached to the body 9 which advantageously comprises means for mechanically fastening the mobile phone into it for the duration of a ride, for example. The body 9 is advantageously made of plastic and there is connected to it a ground plane 11 which can be a metal plate or an electrically conductive coating section, for example, and which in the embodiment illustrated is located on the bottom surface of the body 9. The ground plane 11 intensifies coupling to the frame of the mobile phone and prevents the occurrence of radiation losses in the direction of the ground plane as seen from the antenna D. The apparatus also comprises a coaxial cable 12 having a middle conductor 12a and a skin conductor 12b. The middle conductor 12a is connected to the inner conductor of the coupling element 10, and the skin conductor 12b is connected to the outer conductor of the coupling element 10 which is in galvanic contact with the ground plane 11, too. At the other end of the coaxial cable 12 there is an external antenna, such as a car antenna (not shown).

In the embodiment illustrated in Fig. 3, the location of the coupling element 10, relative to the mobile phone antenna D, is such that the axis D1 of the antenna and the coupling element are on one and the same plane (the paper surface in Fig. 3) but there is between them an angle **a**. The purpose of this is that the electromagnetic field radiated by the antenna D is fed to the coupling element 10 through the open end surface 4 and, upon passing the surface, it is refracted such that, having penetrated into the dielectric body material, it propagates in it in an optimal manner. In the embodiment shown, angle a is about 40 degrees. It has been chosen empirically by measuring the power of the mobile phone antenna D and the power of the external antenna, calculating the coupling loss between them and changing the angle **a** such that the least coupling loss is achieved. Since different antenna types have different direction patterns at a distance of a few millimeters from the antenna, the right value for angle a should be determined separately for each antenna type. The angle value also depends on the dielectric constant of the body material of the coupling element 10 because the greater the difference between the dielectric constants of two materials, the more an electromagnetic wave refracts at their boundary surface. Furthermore, the value of angle a depends on the amount and shape of conductive patterns formed on the surface of the coupling element. Determining the optimum position for the coupling element empirically is a technique known to a person skilled in the art and requires no special inventional action.

As the coupling element is attached to the body 9 and the mobile phone A is attached to the body always in the same way, the position of the coupling element 10 relative to the mobile phone antenna D is always the same when the user places the mobile phone in the body for the duration of a ride, for example.

In the embodiment of Fig. 3, the middle conductor 12a of the coaxial cable is connected to the inner conductor of the coupling element at the second end 5 of the element, and the first end 4 of the element points towards the mobile phone antenna. This positioning requires that both end surfaces of the element be uncoated, ie. the element be dimensioned according to half the wavelength. If the second end of coupling element is short-circuited so that the coupling element functions as a quarter-wavelength resonator, the middle conductor 12a of the coaxial cable must be connected to the inner conductor of the coupling element at the first end of the coupling element.

The cylindrical shape of the coupling element presented above as an example does not restrict the invention to only certain shapes of coupling elements. Fig. 4 shows another possible coupling element shape. Here the coupling element 10 is shaped as a rectangular prism which has, referring to the positioning in the drawing, an upper surface 13, a lower surface 14, two end surfaces 15 and two side surfaces 16. The names of the surfaces serve illustrative purposes only and do not restrict the positioning of the piece. The upper and lower surfaces are coated with conductive layers in the same way as the inner surface 1 and outer surface 2 in the embodiment in Fig. 2. The end surfaces 15 are both uncoated, in which case the electrical length of the coupling element is half the wavelength, or one of them is coated, in which case the electrical length of the coupling element is a quarter of the wavelength.

The dielectric body block of the coupling element can be shaped in many ways. Variations to the illustrative embodiments described above are e.g. different bevellings and groove shapes on the surfaces confining the body block in order to control the electromagnetic field in the body block. The arrangement according to the invention may also comprise more coupling elements arranged on different sides of the antenna of the mobile phone attached to the rack, in which case it is possible to further decrease the coupling losses caused by stray radiation.

According to measurements, the dielectric coupling element causes a smaller coupling loss than prior art solutions. In addition, it has a very simple construction and includes no fragile parts or parts susceptible to wear or dirt. The arrangement for connecting a radio communication device to an external antenna requires no special fastening means or awkward threading movements to attach or unattach a mobile phone, so it is extremely easy to use. The invention is well applicable to large-scale series production and its manufacturing costs are reasonable. The invention is not limited to be used only in conjunction with a mobile phone or a car antenna but can be applied to any object where one wishes to connect a radio communication device having an antenna of its own to an external auxiliary antenna.

## Claims

1. An arrangement for connecting a radio telephone (A) having a fixed antenna (D), to an external antenna, comprising
- means (9) for contacting said radio telephone detachably to it,
- a cable (12) for feeding said external antenna, and
- a coupling element (10) for transferring electromagnetic field between the fixed antenna and said cable, and having a longitudinal axis (3), **characterized in that**
- said coupling element has dielectric body with conductive coating on at least two longitudinal surfaces and a coupling hole,
- said coupling element is wholly beside the fixed antenna, and the angle (a) between said longitudinal axis of the coupling element and the axis of the fixed antenna deviates substantially from zero for implementing an effective coupling between the fixed antenna and the coupling element, and
- said contacting means (9) to the radio telephone have conductive and grounded coating (11) connected galvanically to outer of said conductive coatings of the coupling element, the inner of said conductive coatings being arranged for connection to the external antenna.

2. An arrangement according to claim **1, characterized in that** said dielectric body of the coupling element has substantially crosswise directional first end (4) and second end (5) surface, longitudinal third (2) and fourth (1) surface, and longitudinal fifth (6) and a sixth (7) surface, which both intersect first and second end surfaces and third and fourth surfaces, and
- said first end surface is electrically open defining a coupling hole for feeding said electromagnetic field to the dielectric body block, and
- the one of said two conductive coatings of the dielectric body is an skin-like outer conductor on the third surface, and the other of said two conductive coatings of the dielectric body is an skin-like inner conductor on the third surface.

3. The arrangement according to claim 2, whereupon said cable is a coaxial cable, **characterized in that** said outer conductor is connected galvanically to the skin conductor (12b) of coaxial cable, and said inner conductor is connected galvanically to middle conductor (12a) of coaxial cable.

4. A coupling element according to claim 2, **characterized in that** said second end surface (5) is electrically open providing a half wave resonator at certain frequency.

5. A coupling element according to claim 2, **characterized in that** on said second end surface (5) there is an electrically conductive layer forming a short circuit between said inner and outer conductor and providing a quarter wave resonator at certain frequency.

6. A coupling element according to claim 2, **characterized in that** it further comprises on at least one of said fifth and sixth surfaces at least one electrically conductive parasitic element (8) in order to affect the electrical characteristics of the coupling element.

7. A coupling element according to claim 2, **characterized in that** said third surface (2) is part of a first cylinder surface, the longitudinal symmetry axis of which coincides with said longitudinal axis (3), and said fourth surface (1) is part of a second cylinder surface, the longitudinal symmetry axis of which coincides with said longitudinal axis (3).

8. A coupling element according to claim 2, **characterized in that** said third surface (14) and said fourth surface (13) are both plane surfaces.

## Patentansprüche

1. Anordnung zum Verbinden eines Funktelefons (A) mit ihm fest zugeordneter Antenne (D) mit einer externen Antenne, die einschließt
- Mittel (9) zum Herstellen einer lösbaren Verbindung zwischen Telefon und externer Antenne,
- ein Anschlußkabel (12) für die externe Antenne,
- ein Kupplungselement (10) mit einer Längsachse, das dem Übertragen eines elektromagnetischen Feldes zwischen der fest zugeordneten Antenne und dem Kabel dient
**dadurch gekennzeichnet, dass**
- das Kupplungselement ein elektrisch nicht leitendes Gehäuse aufweist, das in den Bereichen mindestens zweier Längsflächen mit einer elektrisch leitenden Beschichtung versehen ist und eine Kupplungsöffnung aufweist,
- das Kupplungselement in seiner Gesanmtheit neben der festen Antenne angeordnet ist und der Winkel (a) der Längsachse des Kupplungselementes und der Achse der festen Antenne wesentlich von Null abweicht, um zwischen fester Antenne und Kupplungselement eine wirksame Kupplung herzustellen und
- die Verbindungsmittel (9) zum Funktelefon eine elektrisch leitende und geerdete Beschichtung (11) aufweisen, die galvanisch mit der äußersten der elektrisch leitenden Beschichtungen des Kupplungselementes verbunden ist,
- die innere der elektrisch leitenden Beschichtungen zum Verbinden mit der externen Antenne angeordnet ist.

2. Anordnung nach Anspruch 1, **dadurch gekennzeichnet, dass** das elektrisch nicht leitende Gehäuse des Kupplungselementes im wesentlichen in einander kreuzenden Richtungen verlaufende erste und zweite Endflächen (4,5) aufweist, in Längsrichtung verlaufende dritte und vierte Flächen (2,1) und in Längsrichtung verlaufende fünfte und sechste Flächen (6,7), wobei die fünfte und die sechste Flächen sowohl erste und zweite Endflächen, als auch dritte und vierte Flächen schneiden und
- die erste Endfläche elektrisch offen ist, um eine Kupplungsöffnung für die Zuführung des elektromagnetischen Feldes zu dem elektrisch nichtleitenden Gehäusebereich zu bilden und
- die eine der beiden elektrisch leitenden Beschichtungen des elektrisch nichtleitenden Gehäuses ein hautartiger äußerer Leiter auf der dritten Fläche ist und die andere der beiden elektrisch leitenden Beschichtungen des elektrisch nicht leitenden Gehäuses ein hautartiger innerer Leiter auf der dritten Fläche ist.

3. Anordnung nach Anspruch 2, bei der das Kabel ein Koaxialkabel ist, **dadurch gekennzeichnet, dass** der äußere Leiter galvanisch mit dem Hautleiter (12b) des Koaxialkabels und der innere Leiter galvanisch mit dem mittleren Leiter (12a) des Koaxialkabels verbunden ist.

4. Kupplungselement nach Anspruch 2, **dadurch gekennzeichnet, dass** die zweite Endfläche (5) elektrisch offen ist, um einen Halbwellenresonator bestimmter Frequenz zu bilden.

5. Kupplungselement nach Anspruch 2, **dadurch gekennzeichnet, dass** auf der zweiten Endfläche (5) eine elektrisch leitende Schicht gebildet ist, die einen Kurzschlußschaltkreis zwischen innerem und äußerem Leiter bildet und einen Halbwellenresonator bestimmter Frequenz bereitstellt.

6. Kupplungselement nach Anspruch 2, **dadurch gekennzeichnet, dass** es ferner enthält auf zumindest einer von fünfter und sechster Fläche zumindest ein elektrisch leitendes parasitäres Element (8), um die elektrischen Charakteristiken des Kupplungselementes zu beeinflussen.

7. Kupplungselement nach Anspruch 2, **dadurch gekennzeichnet, dass** die dritte Fläche (2) Teil einer ersten Zylinderfläche ist, deren Längssymmetrieachse mit der genannten Längsachse (3) zusammenfällt und die vierte Fläche (1) Teil einer zweiten Zylinderfläche ist, deren Längssymmetrieachse mit der genannten Längsachse (3) zusammenfällt.

8. Kupplungselement nach Anspruch 2, **dadurch gekennzeichnet, dass** sowohl dritte Fläche (14), als auch vierte Fläche (13) ebene Flächen sind.

## Revendications

1. Agencement destiné à relier un téléphone radio (A) comportant une antenne fixe (D), à une antenne externe, comprenant
- un moyen (9) destiné à mettre en contact ledit téléphone radio de façon amovible avec celui-ci,
- un câble (12) destiné à alimenter ladite antenne externe, et
- un élément de couplage (10) destiné à transférer un champ électromagnétique entre l'antenne fixe et ledit câble, et présentant un axe longitudinal (3), **caractérisé en ce que**
- ledit élément de couplage comporte un corps diélectrique avec un revêtement conducteur sur au moins deux surfaces longitudinales, et un trou de couplage,
- ledit élément de couplage étant complètement à côté de l'antenne fixe, et l'angle (a) entre ledit axe longitudinal de l'élément de couplage et l'axe de l'antenne fixe s'écarte sensiblement de zéro pour mettre en oeuvre un couplage efficace entre l'antenne fixe et l'élément de couplage, et
- ledit moyen de contact (9) du téléphone radio comporte un revêtement conducteur et mis à la masse (11) relié de façon galvanique à l'extérieur desdits revêtements conducteurs de l'élément de couplage,
l'intérieur desdits revêtements conducteurs étant agencé en vue d'une connexion à l'antenne externe.

2. Agencement selon la revendication 1, **caractérisé en ce que** ledit corps de diélectrique de l'élément de couplage présente une surface de première extrémité (4) et de seconde extrémité (5) directionnelles sensiblement transversales, une troisième surface longitudinale (2) et une quatrième surface longitudinale (1), et une cinquième (6) et une sixième (7) surfaces longitudinales qui recoupent toutes deux des première et seconde surfaces d'extrémité et les troisième et quatrième surfaces, et
- ladite première surface d'extrémité est électriquement ouverte en définissant un trou de couplage pour appliquer ledit champ électromagnétique au bloc du corps de diélectrique, et
- le premier desdits deux revêtements conducteurs du corps de diélectrique est un conducteur extérieur du type à effet de peau sur la troisième surface, et l'autre desdits deux revêtements conducteurs du corps de diélectrique est un conducteur intérieur du type à effet de peau sur la troisième surface.

3. Agencement selon la revendication 2, dans lequel ledit câble est un câble coaxial, **caractérisé en ce que** ledit conducteur extérieur est relié de façon galvanique au conducteur à effet de peau (12b) du câble coaxial, et ledit conducteur intérieur est relié de façon galvanique au conducteur intermédiaire (12a) du câble coaxial.

4. Elément de couplage selon la revendication 2, **caractérisé en ce que** ladite seconde surface d'extrémité (5) est électriquement ouverte en réalisant un résonateur demie onde à une certaine fréquence.

5. Elément de couplage selon la revendication 2, **caractérisé en ce que**, sur ladite seconde surface d'extrémité (5) se trouve une couche électriquement conductrice formant un court-circuit entre ledit conducteur intérieur et extérieur et réalisant un résonateur quart d'onde à une certaine fréquence.

6. Elément de couplage selon la revendication 2, **caractérisé en ce qu'**il comprend en outre sur au moins une desdites cinquième et sixième surfaces au moins un élément parasite électriquement conducteur (8) de manière à affecter les caractéristiques électriques de l'élément de couplage.

7. Elément de couplage selon la revendication 2, **caractérisé en ce que** ladite troisième surface (2) fait partie d'une première surface cylindrique, dont l'axe de symétrie longitudinal coïncide avec ledit axe longitudinal (3), et ladite quatrième surface (1) fait partie d'une seconde surface cylindrique, dont l'axe de symétrie longitudinal coïncide avec ledit axe longitudinal (3).

8. Elément de couplage selon la revendication 2, **caractérisé en ce que** ladite troisième surface (14) et ladite quatrième surface (13) sont toutes deux des surfaces planes.
